# EUROPÄISCHE PATENTSCHRIFT

(11) **EP 2 718 146 B1**
(45) Veröffentlichungstag und Bekanntmachung des Hinweises auf die Patenterteilung: **10.05.2017**
(21) Anmeldenummer: 12730175.2
(22) Anmeldetag: 06.06.2012
(51) Int. Cl.: B60R 1/08

(54) **AUSSENRÜCKBLICKSPIEGEL**
EXTERIOR REARVIEW MIRROR
RÉTROVISEUR EXTÉRIEUR

(30) Priorität: 08.06.2011 DE 102011103547
(43) Veröffentlichungstag der Anmeldung: 16.04.2014
(73) Patentinhaber: SMR Patents S.à.r.l., 1653 Luxembourg (LU)
(72) Erfinder: NEGEL, Raimund, 72669 Unterensingen (DE)
(74) Vertreter: Weber-Bruls, Dorothée
(86) Internationale Anmeldenummer: PCT/EP2012/060696
(87) Internationale Veröffentlichungsnummer: WO 2012/168297

(56) Entgegenhaltungen:
- EP-A1- 0 692 407
- EP-A2- 1 972 497
- DE-A1- 3 620 228
- DE-A1- 10 123 977
- DE-U1- 29 617 073
- DE-U1- 29 704 227
- DE-U1- 29 815 616
- US-B2- 6 717 712

## Beschreibung

Die vorliegende Erfindung betrifft einen Außenrückblickspiegel mit den Merkmalen des Oberbegriffs des Anspruchs 1.

### Hintergrund der Erfindung

Kraftfahrzeuge müssen als Teil ihrer Zulassungsvoraussetzungen Einrichtungen für die indirekte Sicht vorweisen. Die indirekten Sichtsysteme sind im Augenblick Spiegelgläser, die am Fahrzeug angebracht sind. Die Vorschriften für die Anbringung der indirekten Sichtsystems und deren Auslegung zur Abdeckung von erforderlichen Sichtfeldern sind in verschiedenen nationalen oder supranationalen Regeln festgelegt.

Diese Erfordernisse münden in unterschiedliche Spiegelgläser, die zur Abbildung des indirekten Bildes dienen.

### Stand der Technik

In der aktuellen ECE Regulierung regel 46 werden die Sichtfelder und Gläser der Außenrückblickspiegel definiert und die Erfordernisse festgelegt. Dabei sind im Raum der ECE Regulierungen fahrer- und beifahrerseitig außer den planen Spiegelgläser, konvex gekrümmte Gläser sowie konvex gekrümmt Gläser mit einem asphärischen Anteil zulässig. Gerade die konvexen Spiegelgläser mit asphärischem Anteil bieten dem Nutzer ein erweitertes Blickfeld, das die Zonen der Totwinkel reduziert. Allerdings vergrößert dieser asphärische Anteil den gesamten Spiegel, da nach der aktuellen Regulierung die Sichtfelderfordernisse nicht und auch nicht teilweise im asphärischen Bereich zu erfüllen sind. Der asphärische Teil dient dabei dem Komfort, so dass der Fahrer nur einen reduzierten Totwinkelbereich beachten muss. Die Anordnung des asphärischen Anteils am Spiegelglas ist im Stand der Technik immer an der äußeren vom Fahrzeug weg zeigenden Richtung angeordnet.

Ein nicht gattungsgemäßer Außenrückblickspiegel mit einer gemeinsamen vertikalasphärischen Fläche für einen Haupt- und einen Nebensichtbereich ist aus DE 101 23 977 A1 bekannt.

Die DE 297 04 227 U1 betrifft einen Rückblickspiegel mit einem asphärischen gebogenen Außenrandbereich zur Totwinkelerfassung.

Aus der DE 296 17 073 U1 ist ein Außenspiegel bekannt, der zur Überwachung des Einstiegsbereichs eines Busses in seinem unteren Randbereich einen aspärisch gekrümmten Bereich aufweist.

Aus der US 6717712 sind plane Außenrückblickspiegel bekannt, die mit gekrümmten Zusatzbereichen versehen sind. Da die in den USA zulässigen und geforderten planen Spiegelgläser auf der Fahrerseite nur ein eingeschränktes Blickfeld ermöglichen, sind so genannte "Spotter" Spiegel-Einsätze erlaubt. Diese Einsätze können auch asphärisch gestaltet sein und werden an unterschiedliche Stellen des Spiegelglases eingesetzt, wobei die plane Spiegelfläche zur Erreichung des gesetzlichen Sichtfeldes erhalten werden muss.

Um den Zulassungsregulierungen zu genügen wird dabei kein Bereich des Sichtfeldes im gekrümmten Teil des Außenspiegelglases dargestellt. Die resultierende Größe des Spiegelglases erlaubt es nicht den Außenspiegel kleiner und damit aerodynamischer zu gestalten.

Es ist Ziel der Erfindung die Größe des Spiegelglases zu reduzieren und gleichzeitig die Funktionalität der Reduzierung des toten Winkels für den Fahrer zu erhalten.

Die Aufgabe wird durch einen eingangs genannten Außenrückblickspiegel durch die Merkmale des kennzeichnenden Teils von Anspruch 1 gelöst. Die Unteransprüche beschreiben weitere Ausführungsformen.

### Kurze Beschreibung der Erfindung

Die Erfindung wird in den Figuren dargestellt und in der nachfolgenden Beschreibung näher erläutert.
- Figur 1: zeigt Sichtfelderfordernisse nach ECE Regel 46
- Figur 2: zeigt einen beifahrerseitigen rechten Spiegel
- Figur 3: zeigt eine erfindungsgemäße Lösung
- Figur 4: zeigt alternative Lösungen

Die nachfolgenden Erklärungen beziehen sich auf die ECE Regulierungen, die in vielen Ländern weltweit Geltung hat. Weiterhin werden die Ausführungen beispielhaft für Fahrzeuge mit linksseitiger Steuerung beschreiben. Die Erfindung ist aber auch für andere Regulierungen sowie für rechtsgesteuerte Fahrzeuge gültig.

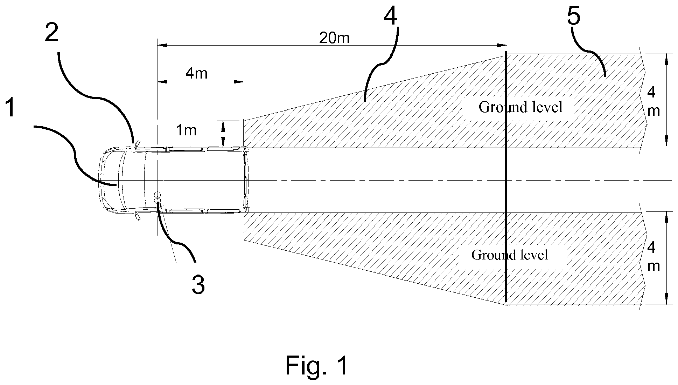

Figur 1 zeigt ein beispielhaftes Fahrzeug 1 an dessen Außenseite zwei Außenspiegel 2 befestigt sind. In der Zeichnung ist mit Position 3 die Lage der Augen des Fahrers definiert. Zwei Bereiche sind nach der ECE Regulierung als Sichtfeld vorgeschrieben ein Nah- und ein Fernbereich. Der Nahbereich 4 beschreibt einen Bereich von 1 m neben dem Fahrzeug, wobei der Nahbereich 4 m von der Augenposition des Fahrers entfernt in der Längsachse des Fahrzeugs beginnt. Der Nahbereich endet bei 20 m hinter der Augenposition 3 des Fahrers Der Fernbereich 5 beschreibt einen 4 m breiten Streifen beginnend 20 m von der Augenpositiont des Fahrers gemessen. Beide Sichtbereiche müssen im Spiegelglas sowohl auf der Fahrer- als auch auf der Beifahrerseite einsehbar sein.

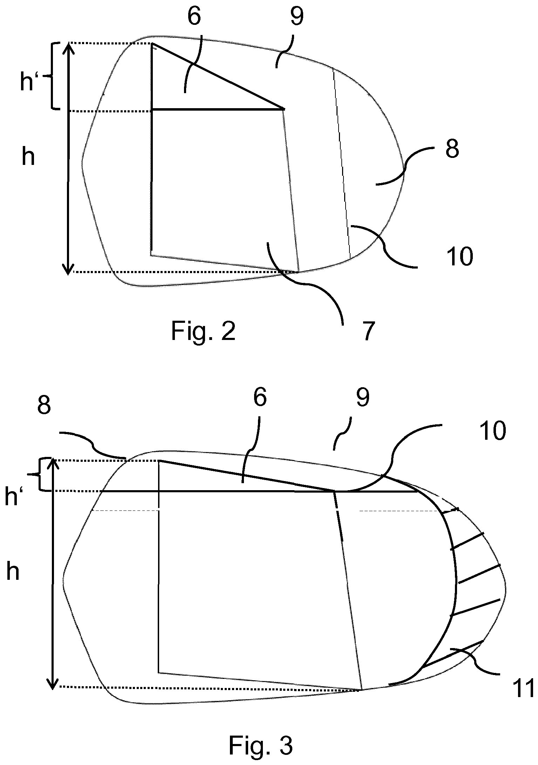

Figur 2 zeigt ein Beispiel eines rechten Außenspiegels gemäß dem Stand der Technik. Auf der reflektierenden Fläche sind die Abgrenzungen eingezeichnet, die bei Erfüllung der Regulierung das vorgeschriebene Sichtfeld umfassen. Im oberen Bereich 6 wird die Abbildung des Fernsichtfeldes und im unteren Bereich 7 das Nahsichtfeld als Linie in der Fläche des Spiegels dargestellt. Eine Trennlinie 10 trennt den konvexen Spiegelteil 9 von seinem asphärischen Spiegelteil 8. Beide Sichtfelder des Nah- und der Fernbereiches werden auf der konvexen Spiegelfläche abgebildet. Gerade der Fernsichtbereich des Spiegels kann nur dann nach den Regeln ausgelegt werden, wenn der Spiegel eine gewisse Bauhöhe aufweist. Diese minimale Höhe h des Spiegelglases wird von der Höhe der Abbildung des Nah- und des Fernsichtfeldes zu einer Gesamthöhe h geprägt.

In Figur 3 wird die erfinderische Lösung zur Reduzierung der Spiegelfläche ausgeführt. Der asphärische Spiegelteil 8 wird so gelegt, dass die Abbildung des Fernfeldes 6 in diesem Spiegelteil erfolgt. Durch die abnehmenden Radien des asphärischen Spiegelteils ist die Abbildung des Fernfelds auf einer insgesamt kleiner Fläche möglich und die Höhe h' wird kleiner. In Summe mit der Abbildung des Nahfeldes wird die Gesamthöhe h der Abbildungen kleiner und der Spiegel somit in seiner Bauhöhe reduzierbar.

Der schraffierte Bereich des Spiegels entfällt ebenfalls, wenn der asphärische Bereich 8 an der oben liegenden Kante des Spiegelglases angebracht ist. Durch die Abbildung des Sichtfeldes in den asphärischen Bereich 8 des Spiegels wird der Gesamtspiegel in seiner Bauhöhe und seiner Breite deutlich reduziert, aber die Komfortfunktion des asphärischen Spiegelteils 8 bleibt erhalten.

Alternativ zu der Position am oberen Rand des Spiegelglases kann der asphärische Bereich auch unten oder außen oder schräg angebracht sein. Wichtig ist dabei nur, dass ein Teil der Abbildung des Nah- oder Fernbereichs im sphärischen Anteil 8 des Spiegels erfolgt. Die eingezeichnete Trennlinie muss nicht auf dem Spiegelglas beispielsweise als schwarze Linie eingezeichnet sein. Die Trennlinie bezeichnet die Stelle des Übergangs zwischen konvexem und asphärischen Spiegelteil.

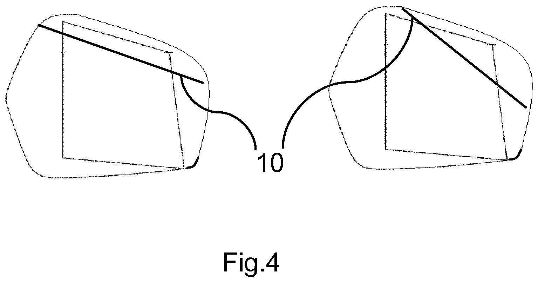

Figur 4 zeigt alternative Lagen für die Anbringung des asphärischen Teils des Spiegelglases. In allen eingezeichneten Fällen ragt die Abbildung der vorgeschriebenen Sichtfelder in den asphärischen Bereich hinein. Und den dargestellten Ausführungsformen wird die Abbildung des Fernfeldes 6 mindestens teilweise im asphärischen Spiegelteil vorgenommen.

Die Erfindung ist nicht auf die Verwendung von mineralischem Glas eingeschränkt, vielmehr sind auch Kunststoffspiegel mit der erfindungsgemäßen Aufteilung umfasst.

## Patentansprüche

1. Außenrückblickspiegel (2) mit einem Spiegelglas, das in einem Spiegelkopf eingebaut ist, wobei
der Spiegelkopf gegen einen Spiegelfuß, mit dem der Außenrückblickspiegel (2) an einem Fahrzeug (1) befestigt ist, schwenkbar gelagert ist,
das Spiegelglas mindestens zwei Spiegelteile (8, 9) mit unterschiedlichem Krümmungsradius aufweist, von denen ein Spiegelteil ein asphärisches Spiegelteil (8) umfasst,
eine Trennlinie (10) an der Stelle des Übergangs zwischen den Spiegelteilen (8,9) gezogen ist, und
ein oberer, einen Fernbereich (5) darstellender Bereich (6) und ein unterer, einen Nahbereich darstellender Bereich (7) vorliegen, um den Nahbereich (4) sowie den Fernbereich (5) als Sichtfeld nach ECE Regulierung darzustellen,
**dadurch gekennzeichnet, dass**
die Trennlinie (10) in etwa horizontal derart verläuft, dass der obere, den Fernbereich (5) darstellende Bereich (6) oberhalb und der untere, den Nahbereich (4) darstellende Bereich (7) unterhalb der Trennlinie (10) liegt, der asphärische Spiegelteil (8) durch seine abnehmenden Radien die Abbildung des Fernbereichs (5) umfasst sowie an der oben liegenden Kante des Spiegelglases angebracht ist, und der weitere Spiegelteil (9) die Abbildung des Nahbereichs (4) umfasst sowie konvex ist.

## Claims

1. External rear view mirror (2) with a mirror glass installed in a mirror head,
wherein
the mirror head is supported in such a manner that it can be pivoted against a mirror foot that is affixed to the external rear view mirror (2) on a vehicle (1),
the mirror glass having at least two mirror parts (8, 9) with different curvature radius, of which one mirror part comprises an aspherical mirror part (8),
a dividing line (10) is drawn at the point of transition between the mirror parts (8,9), and
an upper area (6) showing a distant area (5) and a lower area (7) showing a close-up area (4) are provided in order to show the close-up area (4) and the distant area (5) as a field of view according to ECE regulations,
**characterized in that**
the dividing line (10) runs approximately horizontally in such a manner that the area (6) that shows the distant area (5) lies above the dividing line (10) and the area (7) that shows the close-up area (4) lies below it, the aspherical mirror part (8) comprises the image of the distant area (5) through its decreasing radii and is attached on the upper edge of the mirror glass, and the additional mirror part (9) comprises the image of the close-up area (4) and is convex.

## Revendications

1. Rétroviseur extérieur (2) pourvu d'un miroir, qui est intégré dans une tête de rétroviseur, dans lequel
la tête de rétroviseur est montée de manière à être pivotante et contre un pied de rétroviseur, avec lequel le rétroviseur extérieur (2) est fixé à un véhicule (1),
le miroir comporte au moins deux parties de miroir (8, 9) avec
un rayon de courbure différent, dont l'une compris une partie de miroir asphérique (8),
une ligne de séparation (10) est marquée à la jonction des parties de miroir (8, 9), et
une zone supérieure (6) représentant un champ « longue distance » (5) et une zone inférieure (7) représentant un champ « courte distance » sont présentes, de manière à ce que le champ « courte distance » (4) ainsi que le champ « longue distance » (5) représentent un champ de vision selon la règlementation de la CEE-ONU,
**caractérisé en ce que**
la ligne de séparation (10) s'étend essentiellement horizontalement, de telle sorte que la zone supérieure (6) représentant un champ « longue distance » (5) et la zone inférieure (7) représentant un champ « courte distance » (4) se situent respectivement au-dessus et en dessous de ladite ligne de séparation (10), la partie de miroir asphérique (8) compris une projection du champ « longue distance » (5) par le biais de ses rayons décroissants et soit fixée au coin supérieur du miroir, et l'autre partie de miroir (9) compris une projection du champ « courte distance » (4) et soit convexe.
